# EUROPEAN PATENT SPECIFICATION

(11) **EP 4 420 808 B1**
(45) Date of publication and mention of the grant of the patent: **25.03.2026**
(21) Application number: 22921459.8
(22) Date of filing: 02.08.2022
(51) Int. Cl.: B21J 5/06, B21J 5/08, B21J 5/02, B21J 13/02, B21J 13/06, B21J 13/10, B21K 1/08, F16C 3/08

(54) **TWO-HEATING FORGING PROCESS FOR A LARGE CRANK THROW**
ZWEISTUFIGER ERWÄRMUNGS-SCHMIEDEVERFAHREN FÜR EINEN GROSSEN KURBELWELLENARM
PROCEDE DE FORGEAGE A DEUX CHAUFFES POUR UN GRAND BRAS DE VILEBREQUIN

(30) Priority: 20.01.2022 CN 202210065615; 20.01.2022 CN 202210066077; 20.01.2022 CN 202210065671; 20.01.2022 CN 202210066376
(43) Date of publication of application: 28.08.2024
(73) Proprietor: Zhongjuxin Ocean Engineering Equipment Co., Ltd., Yancheng, Jiangsu 224751 (CN)
(72) Inventor: ZHANG, Hui, Yancheng, Jiangsu 224751 (CN); ZHANG, Lianhua, Yancheng, Jiangsu 224751 (CN); CHEN, Xizhong, Yancheng, Jiangsu 224751 (CN)
(74) Representative: Heinonen & Co
(86) International application number: PCT/CN2022/109747
(87) International publication number: WO 2023/138030

(56) References cited:
- CN-A- 1 947 886
- CN-A- 101 195 145
- CN-A- 103 128 209
- CN-A- 104 493 030
- CN-A- 113 926 973
- CN-A- 114 309 411
- CN-A- 114 309 428
- CN-A- 114 309 429
- CN-A- 114 346 144
- CN-Y- 200 963 665
- JP-A- S52 111 863
- JP-A- S6 049 824
- KR-A- 20020 072 859
- KR-B1- 100 528 085

## Description

### Technical Field

The present disclosure relates to a crank throw forging piece, and particularly to a two-heating (two-fire) forming forging process for a large crank throw, and belongs to the technical field of forging. In particular, the present disclosure relates to a combined crank throw forging piece preform, and particularly to a forging process for a large combined crank throw preform. Besides, the present disclosure also relates to forging of a large crank throw, and particularly to a forging process for a journal portion of a large crank throw. In addition, the present disclosure further relates to a forming forging process for a crank throw.

### Background Art

Crankshaft is a main part for converting mechanical rotational movement and back-and-forth movement. Crank throw is an important part on the crankshaft. As the crankshaft is responsible for conversion between the mechanical rotational movement and the back-and-forth movement, the crank throw of a large crankshaft is subjected to a large and complex force, and therefore it should have sufficient rigidity and strength and be able to withstand impact loads. In order to meet the above performance requirements, a forged product is generally used as the crank throw of a large combined crankshaft is often. A forged crank throw is relatively complex to produce, and it needs many steps, multiple times of heating, and repeated change of anvil dies to finish the production. Journal (crank neck) is a part where a crank throw is connected to a connecting rod, and its forging forming process is the most complex, where a cylindrical forging blank similar to a net shape of the journal is integrally forged at one end of two wings of the crank throw.

Common forging methods include: solid forging method, die forging method and bending forging method. In the above, the die forging method requires a forging machine with tens of thousands of tons of pressure and an expensive die, while forging piece quality is dissatisfactory. The bending forging method has a good metal flow direction, good forming, easy operation, and low requirements to device, but has a large heating number, which increases material consumption and energy consumption. The most advanced manufacturers at home and abroad even need 5-7 heating times to finish the forging, and cold machining allowance of the forging piece is very large. There are two conventional methods for forging a crank throw, namely, die forging and free forging. The methods have certain disadvantages, and have high production cost, low production efficiency, and requirement for forging machine of 10000 tons or above and expensive die; secondly, the forging piece yield is quite low, and fails to meet forging ratio, causing coarse and unqualified structural grains inside forging pieces; and thirdly, breakage and folding of the forging pieces often occur.

The applicant made simulation calculation and scientific analysis on the above problems. The conventional crank throw forging process has the following defects: firstly, the forging process is backward; secondly, the die configuration is unreasonable; and thirdly, the method of changing anvil dies is unscientific. Therefore, it is necessary to scientifically design and improve the forging process.

CN113926973 A discloses a forging system for large crank throws, using forging machine with an upper anvil, replaceable dies, and manipulators operating on longitudinal and transverse workbenches. The process includes billet upsetting, indentation forming, boss forging, trapezoidal groove formation, bending, and final shaping. Following a step of forming a trapezoidal groove into the boss portion using a trapezoidal anvil, the trapezoidal groove is then forged using a concave die and turning the workpiece in order to form the journal surface.

KR100528085 B1 discloses a method for manufacturing a crank throw for ship engines using a V-shaped preform. The process includes shaping a heated ingot into a preform, performing sequential left-right forging steps to form a V-type neck, and bending the preform to achieve defined necking and bending angles. Forging is carried out using manipulators and specifically shaped dies to form the crank throw geometry efficiently.

CN200963665 Y discloses a bending forging die system for producing large marine crankshaft crank throws. The die system includes an upper die, a wedge-shaped lower die, and arc-shaped working surfaces that conform closely to the geometry of the preformed blank. The preform includes symmetrical V-shaped grooves pressed into its middle section.

JPS52111863 A discloses a method for manufacturing large crank throws using a die forging process optimized for high efficiency and dimensional accuracy. The process involves preforming a cylindrical billet with symmetrical recesses at the central region and then die-forging it using a system of three coordinated tools: a wavy-top anvil, a tapering die, and a punch with a complementary recess.

### Summary

The present disclosure provides a two-heating forming forging process for a large crank throw, including setting shape and parameters of a double-wing body with a boss in first heating, setting transition shape and parameters between double wings and a journal forged in second heating and a bending parameter, and using a semi-die forging process to achieve an objective of completing the forging of a large crank throw forging piece through two times of heating.

Specifically, the present disclosure provides a forging process for a crank throw preform, including: setting shape and parameters of the crank throw preform, providing anvil dies for automatic replacement, and using repeated upsetting and forging processes to complete forging in one heating. The present disclosure provides a forging process for a large crank throw journal, wherein various different special-shape anvil dies are used for repeatedly forging and pressing a forging piece at multiple angles for many times by changing the anvil dies multiple times, so that journal portion is progressively formed, with minimum cold working allowance of the journal portion, and the fastest forging process. The present disclosure provides a forming forging process for a crank throw, including setting shape and parameters of a forging piece in the process, and completing journal forming, process shaping, bending, pressing, and precision forging in one heating, thus achieving the purposes of reducing the heating number and increasing the forging ratio.

The present disclosure provides the following technical solution. A two-heating forming forging process for a large crank throw, including a forging machine, anvil dies and operation devices. The anvil dies include an upper anvil, lower dies, mandrels (core dies) and upper dies. The lower dies include a small flat anvil, a large flat anvil, a double-edge groove pressing die, a male die, a trapezoidal die, and a female die. The upper dies include an upsetting plate, anvil replacement dies and a reversely-buckled bent die. The operation devices include workbenches and manipulators. The workbenches include a horizontal workbench and a longitudinal workbench. The manipulators include a first manipulator and a second manipulator. The upper anvil is connected to the forging machine. The male die and the double-edge groove pressing die respectively form a fixed hinge with the large flat anvil. The anvil replacement dies include a concave anvil replacement die and an arc-shaped anvil replacement die. Multiple mandrels are provided. Different mandrels have a different thickness difference between two ends. The lower die is placed on the horizontal workbench and moves with the horizontal workbench. The first manipulator clamps the forging piece. The second manipulator clamps the mandrel or the upper die. The two-heating forming forging process for a large crank throw has the following characteristics.

The two-heating forming forging process for a large crank throw may include the following steps.
First heating: forging a preform of a double-wing body with a boss in the middle
   Setting the double-wing body to have a length L, a width b, a height h₁; and setting the boss to have a height h₂ and a width b, so that a total height of the preform is: h=h₁+h₂,
   Step 1, selecting steel billet according to weight requirement of a crank throw forging piece, and heating the steel billet to a set forging temperature;
   Step 2, placing the steel billet heated in step 1 between the upper anvil and the small flat anvil, to stretch (draw out) the steel billet;
   Step 3, standing the forging piece stretched in step 2 on the longitudinal workbench in a length direction, and clamping, by the second manipulator, the upsetting plate to be placed between the forging piece and the upper anvil, and upsetting the forging piece to 1/2 of its original length;
   Step 4, stretching the forging piece upset in step 3 to make it have a section of (3b/4) x (3b/4);
   Step 5, standing the forging piece stretched in step 4 on the longitudinal workbench in the length direction, and upsetting the forging piece to 1/2 of its original length;
   Step 6, stretching the forging piece upset in step 5 to make it have a section of b x b;
   Step 7, placing a middle part of the forging piece in step 6 on the double-edge groove pressing die, and forging parallel left and right grooves on a lower side of the forging piece;
   Step 8, flipping the forging piece with the left and right grooves in step 7 in an up-down (vertical) direction by 180°, and forging the same on the large flat anvil, and correspondingly, forging a left side of the left groove and a right side of the right groove into a double-wing body with a width b, a height h₁, and a length L, and forging a boss with a height h₂ and a width b between the left and right grooves, so as to make a double-wing preform;
Second Heating: Forging Forming
   Setting a transition shape and parameters of the double wings and the journal, and setting bending parameters,
   I. Forging Journal
      Step 9, heating the forging piece in step 8 to a forging temperature;
      Step 10, placing the heated preform on the large flat anvil, pressing the double wings thin and stretching the wings, and finishing them to a set size of the forging piece in the process;
      Step 11, clamping the preform by the first manipulator, placing a middle part of the preform in step 10 on the male die, forging the preform by flipping back and forth by 180°, moving the preform left and right, and changing positions for many times, so as to primarily forge two side surfaces of the journal;
      Step 12, placing the preform in step 11 on the trapezoidal die with the boss upward, clamping, by the second manipulator, the concave anvil replacement die to sheath the preform, and preliminarily forging a lower surface of the journal from opposite bottom surfaces of the boss of the double-wing body;
      Step 13, placing the two side surfaces and the lower surface of the journal in steps 11 and 12 on the male die, and forging the two side surfaces, the lower surface and connection parts of the journal by alternately flipping the preform back and forth and moving the preform left and right, to approximate shape of the journal;
      Step 14, placing the journal of the preform in step 13 on the female die, flipping back and forth to change forging and pressing angles, making the upper anvil press down a head portion of the boss, to forge and press the head portion of the boss into an upper surface of polygonal journal, and forge and press the two side surfaces and the lower surface of the journal to be semi-cylindrical;
      Step 15, placing the journal forged in step 14 alternately on the male die and the female die, and forging the journal at multiple angles by using an uneven anvil and the arc-shaped anvil replacement die as the upper anvils, to obtain a cylindrical blank of the journal;
   II. Bending
      Step 16, placing the lower surface of the cylindrical journal on the female die, clamping, by the second manipulator, the reversely-buckled bent die to be reversely buckled on upper surfaces of the two wings of the double-wing body, and making the upper anvil press down, so as to bend the preform to a set angle, forming a "herringbone" shape;
   III. Pressing
      Step 17, placing the preform in a "herringbone" shape on the large flat anvil, inserting, by the second manipulator, a mandrel with the largest thickness difference between two ends into an opening of the preform, making the upper anvil press down to press two sides of the "herringbone" to make two sides of the preform get close to each other, flipping the preform up and down to be forged and pressed again, and making the two sides of the preform get close to the mandrel;
      Step 18, changing in sequence the mandrels with a gradually decreased thickness difference between two ends, repeating actions in step 17, attaching the two wings of the double-wing body to the mandrel, forging the forging piece by flipping, and precision-forging outer sides of the double-wing body, to obtain cranks of the crank throw;
   IV. Stretching Head
      Step 19, flipping the mandrel and the preform in synchronization in a pressed state, placing them on the large flat anvil to forge the head portion of the boss, and stretching the head portion into a square-frustum crank throw head portion;
   V. Finishing
      Step 20, placing the preform in step 19 on the large flat anvil or the small flat anvil, and finishing the crank throw to a set size.

Preferably, the first manipulator may be a left manipulator, and the second manipulator may be a right manipulator.

Preferably, in step 2, the steel billet may be stretched to 1.2-1.7 times of the original length.

Preferably, in step 3, rectangular forging piece may be upset to 1/2±20% of its original length.

Preferably, in step 4, the forging piece may be stretched into a rectangular blank with a section of 3b/4 (1±5%) x 3b/4 (1±5%).

Preferably, in step 5, the forging piece may be upset to 1/2±10% of its original length.

Preferably, in step 6, the forging piece may be stretched to have a section of b(1+0~5%) x b(1+0-5%).

Preferably, the male die may be an arc-shaped die.

Preferably, a diameter of the preform of the journal in the up-down direction may be a diameter of a finished product ±5% (95-105% of the diameter of the finished product).

Preferably, a concave surface of the concave anvil replacement die may be meshed with a convex surface of the preform.

In the present disclosure, the shape and parameters of the preformed forging piece with a boss and double wings in the first heating are set, and multiple upsetting and stretching processes are used to complete the forging of the preform; the shape and parameters of multi-step transition piece in the second heating are set; forging and pressing are performed by changing angles, flipping back and forth, moving left and right, and anvil dies are repeatedly changed; rolling, extruding and bending are performed with use of the reversely-buckled bent die provided with an arc-shaped extruding surface; and pressing is performed for multiple times using multiple mandrels, so as to realize progressive transition forming of the forging piece, and complete the forming forging of the crank throw.

The crank throw preform forging process in the present disclosure uses multiple upsetting and stretching processes, which increase the forging ratio, improves internal quality of the forging piece, makes the forging piece gradually formed in progressive transition, and completes the forging of the crank throw preform in one heating, thus achieving the purposes of the simplest forging steps, the minimal material loss, and the lowest production cost.

The forging process for a journal of a large crank throw in the present disclosure uses various different special-shape anvil dies, where the forging and pressing are performed by changing angles, flipping back and forth, moving left and right, and different anvil dies are repeatedly changed, so that the journal is gradually formed, achieving the purposes that the journal blank has a good forming, a small machining allowance, a short forging time, less material loss, and a low production cost.

The forming forging process for a crank throw in the present disclosure uses various different special-shape anvil dies, and performs the forging and pressing by moving left and right, flipping back and forth and changing angles, and different anvil dies are repeatedly changed, so that the journal is gradually shaped. The reversely-buckled bent die is provided between the forging piece and the upper anvil, which not only enables quick change of the anvil dies, but also forms rolling extrusion between the double-wing body of the forging piece and the die during the bending with use of the arc-shaped extruding surface of the bent die, so as to continuously bend the forging piece of the crank throw with a small extruding force and a short extruding stroke, complete the bending process for a large crank throw forging piece by a low-pressure forging machine, and implement the forging forming in one heating.

The present disclosure completes the forming forging and bending forging of the crank throw forging piece with a low pressure and a short forging and pressing stroke, and implements the forging process for a large crank throw forging piece by a low-pressure forging machine. The present design has the characteristics of a large forging ratio, a good forming, a small machining allowance, a short forging time, less material loss and a low production cost.

### Brief Description of Drawings

FIG. 1 is a schematic view of an initial state in step 2,
FIG. 2 is a schematic view of an end state in step 2,
FIG. 3 is a schematic view of an initial state in step 3,
FIG. 4 is a schematic view of an end state in step 3,
FIG. 5 is a schematic view of an initial state in step 4,
FIG. 6 is a schematic view of an end state in step 4,
FIG. 7 is a schematic view of an initial state in step 5,
FIG. 8 is a schematic view of an end state in step 5,
FIG. 9 is a schematic view of an initial state in step 6,
FIG. 10 is a schematic view of an end state in step 6,
FIG. 11 is a schematic view of step 7,
FIG. 12 is a schematic view of an initial state in step 8,
FIG. 13 is a schematic view of an end state in step 8,
FIG. 14 is a front view of a preform,
FIG. 15 is a top view of a preform,
FIG. 16 is a schematic view of step 10,
FIG. 17 is a front view of an initial forging state in step 11,
FIG. 18 is a left view of FIG. 17,
FIG. 19 is a left view of a state of a workpiece in FIG. 17 flipped by 180°,
FIG. 20 is a schematic view of an initial forging state in step 12,
FIG. 21 is a schematic view of an end forging state in step 12,
FIG. 22 is a schematic view of a forging state in step 13 in an orientation,
FIG. 23 is a schematic view of the forging state in step 13 in another orientation,
FIG. 24 is a schematic view of step 14,
FIGs. 25 to FIG. 27 are schematic views of a forging state of an upper anvil and a male die in step 15,
FIGs. 28 to FIG. 30 are schematic views of a forging state of a concave anvil replacement die and a female die in step 15,
FIG. 31 is a schematic view of an initial forging state in step 16,
FIG. 32 is a schematic view of an end forging state in step 16,
FIG. 33 is a schematic view of an initial forging state in step 17,
FIG. 34 is a schematic view of an end forging state in step 17,
FIG. 35 is a schematic view of a forging state in step 18,
FIG. 36 is a schematic view of a state of forging a head portion of a crank throw in step 19,
FIG. 37 is a schematic view of a state of forging a head portion of a crank throw by rotating a forging piece in FIG. 35 by 90°,
FIGs. 38 and 39 are schematic views of precision-forging a crank in step 20 with a mandrel, and
FIGs. 40 and 41 are schematic views of precision-forging a crank in step 20 with mandrel removed.
In the drawings, 1 is an upper anvil, 2 is a first manipulator, 2' is a second manipulator, 3 is a small flat anvil, 4 is a forging piece, 5 is an upsetting plate, 6 is a double-edge groove pressing die, 7 is a preform, 8 is a large flat anvil, 9 is a male die, 10 is a concave anvil replacement die, 11 is a trapezoidal die, 12 is a female die, 13 is an arc-shaped lower die, 14 is a reversely-buckled bent die, and 15 is a mandrel.

### Detailed Description of Embodiments

The present disclosure is further described below in combination with reference to drawings.

### First-heating Forging:

First, steel billet is heated in heating furnace to forging temperature. 16 tons of steel billet may be used.

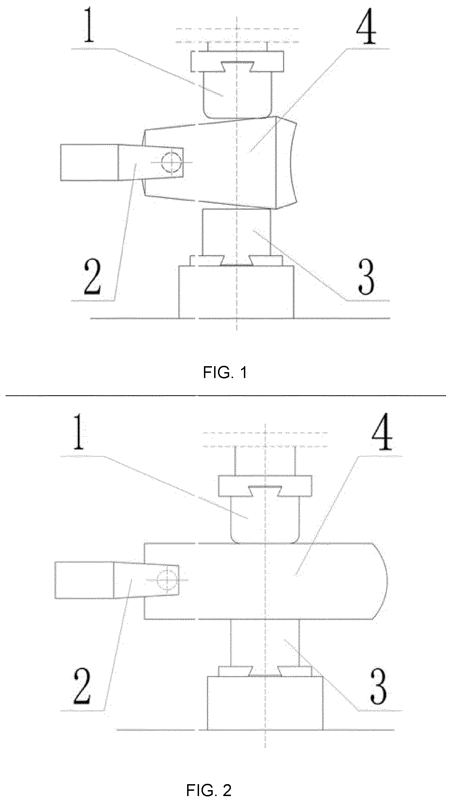

As shown in FIG. 1 and FIG. 2, heated forging piece 4 is clamped by a first manipulator 2 and placed between an upper anvil 1 and a small flat anvil 3. Length and section of the forging piece 4 should meet requirement of length-diameter ratio. Preferably, the forging piece 4 is stretched to 1.5 times of an original length.

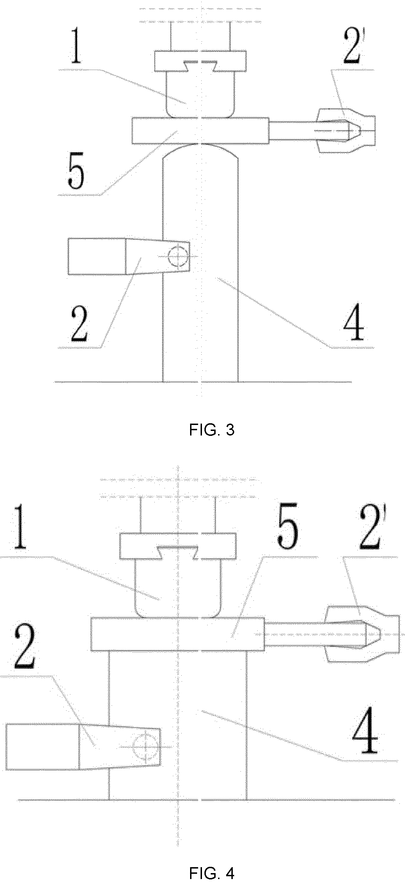

As shown in FIG. 3 and FIG. 4, the stretched forging piece 4 is stood on a longitudinal workbench in a length direction, and an upsetting plate 5 is clamped by a second manipulator 2' and placed between the forging piece and the upper anvil 1, so as to upset the forging piece 4 to half of the original length.

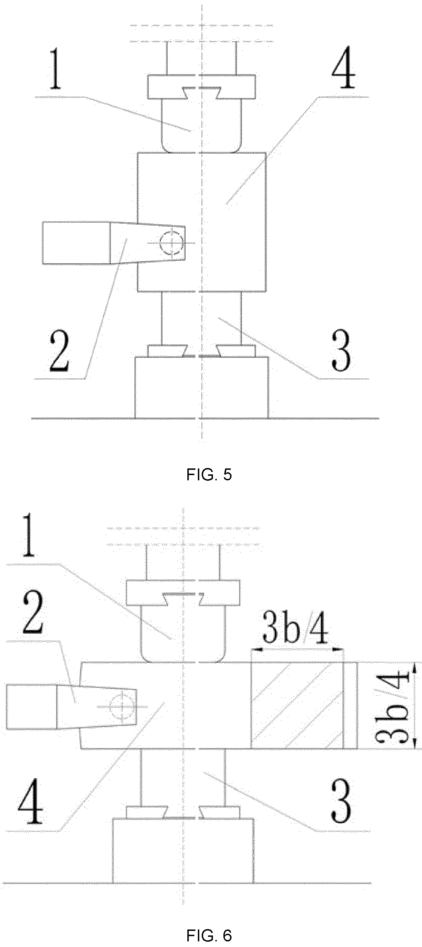

As shown in FIG. 5 and FIG. 6, the forging piece 4 is placed on the small flat anvil 3 and stretched to have a section of (3b/4) x (3b/4). Preferably, the forging piece 4 is placed on the small flat anvil 3, and stretched to have a section of 900 mm x 900 mm and a length of 2500 mm.

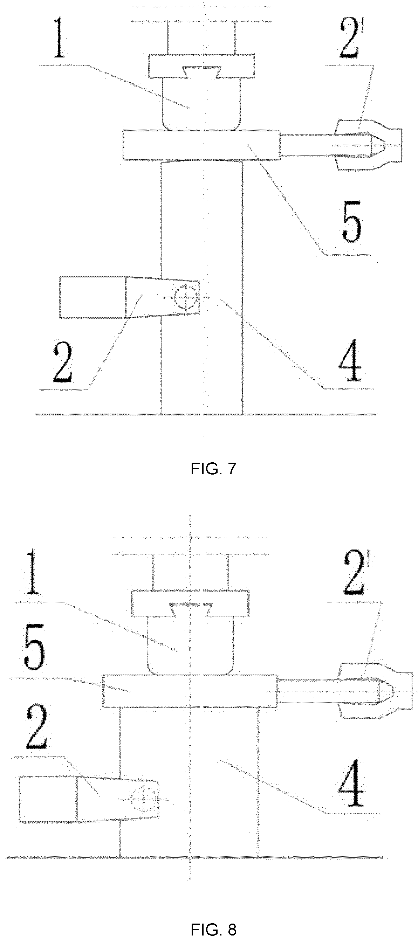

As shown in FIG. 7 and FIG. 8, actions in FIG. 3 and FIG. 4 are repeated to upset the forging piece 4 to half of its original length. Preferably, the forging piece 4 is placed on the small flat anvil 3, and the forging piece 4 is upset to 1250 mm.

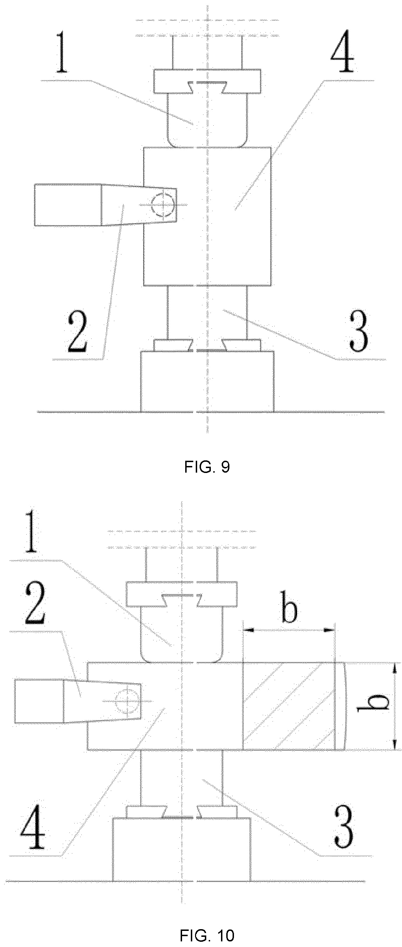

As shown in FIG. 9 and FIG. 10, actions in FIG. 5 and FIG. 6 are repeated to stretch the forging piece 4 to have a section of b × b. Preferably, the forging piece 4 is stretched by the upper anvil 1 and the small flat anvil 3 to have a section of 1200 mm × 1200 mm and a length of 1400 mm.

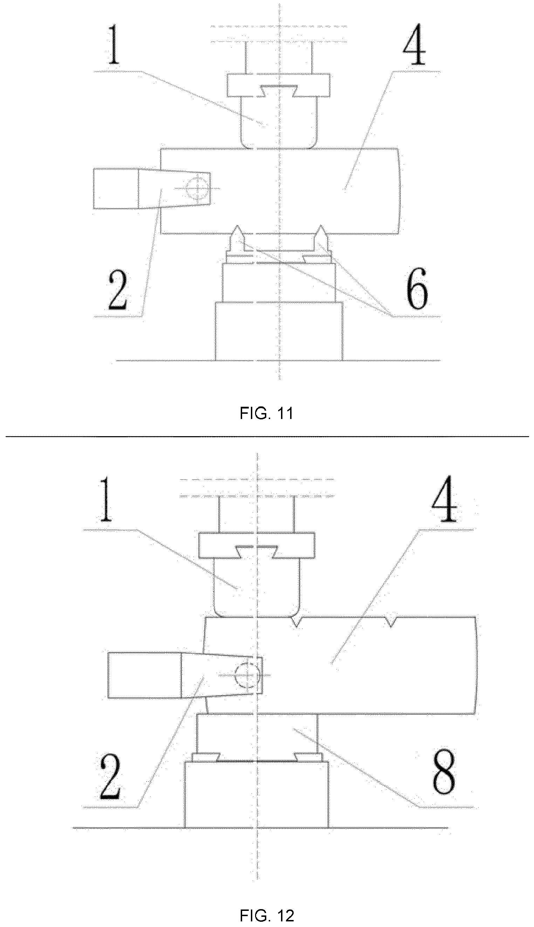

As shown in FIG. 11, a middle part of the forging piece 4 is placed on a double-edge groove pressing die 6 to forge parallel left and right grooves on a lower side of the forging piece 4. Preferably, lower anvil is replaced with the double-edge groove pressing die 11, to forge parallel left and right grooves on the lower side of billet 11.

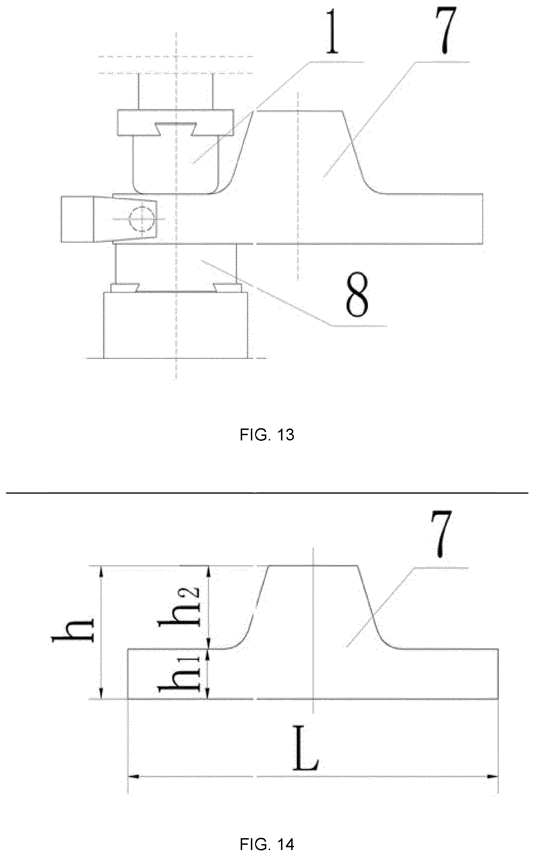

As shown in FIG. 12 and FIG. 13, the forging piece 4 with the left and right grooves is flipped by 180° in an up-down (vertical) direction, and placed on a large flat anvil 8, to forge a left side of the left groove and a right side of the right groove into a double-wing body with a width b, a height h₁ and a length L, and a boss with a height h₂ and a width b is forged between the left and right grooves, so as to make a double-wing preform 7.

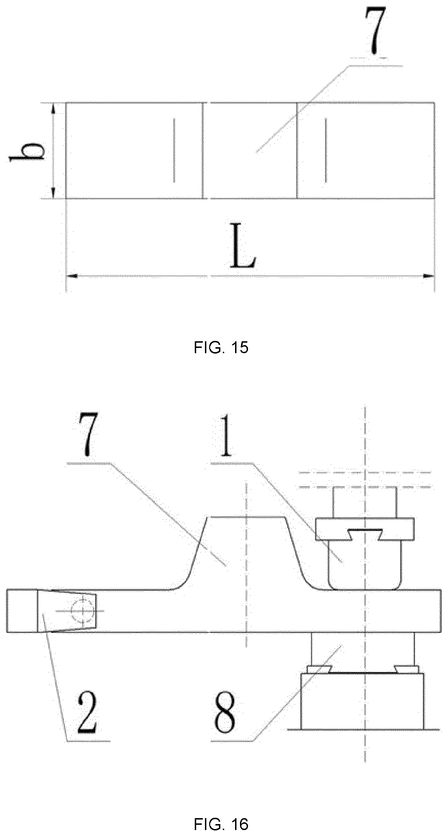

FIG. 14 and FIG. 15 are front and top views of the preform.

### Second-heating Forging

The second-heating forging is performed on the basis that the preform forging has been completed in the first heating, wherein the preform is shaped into the double-wing body with a boss.

The preform is reheated to forging temperature.

As shown in FIG. 16, the heated preform 7 is placed on the large flat anvil 8, and the upper anvil 1 is pressed down, so that the double wings are pressed thin and stretched, and finished to a set size.

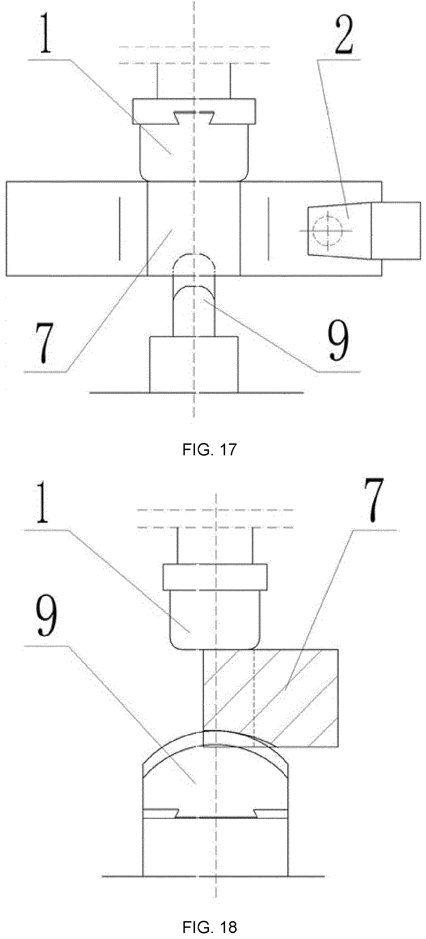

As shown in FIG. 17 to FIG. 19, the preform 7 is clamped by the first manipulator 2, a middle part of the preform 7 is placed on a male die 9, the preform 7 is forged by being flipped back and forth (up and down) by 180°, being moved left and right, and the positions are changed multiple times, so as to primarily forge two side surfaces of a journal.

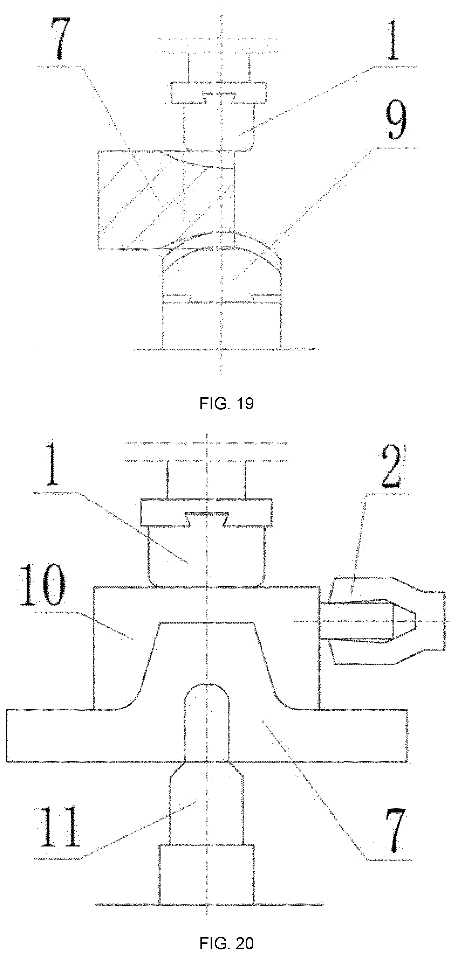

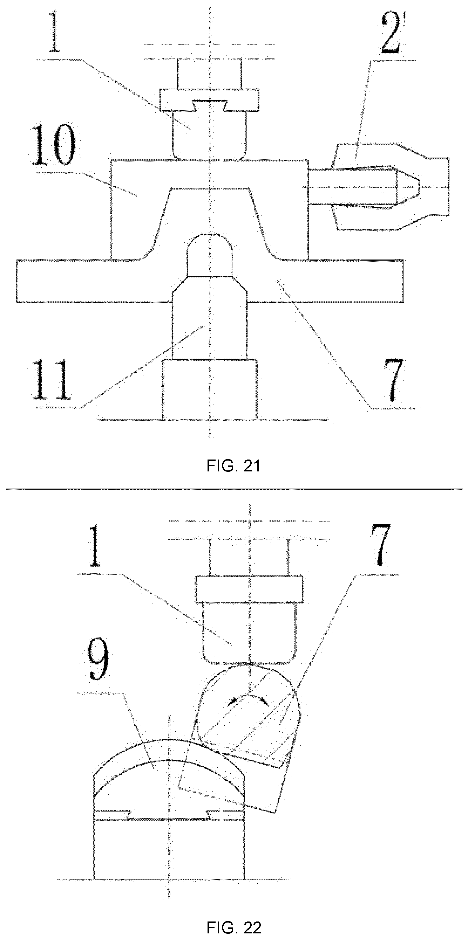

As shown in FIG. 20 and FIG. 21, the preform 7 is placed on a trapezoidal die 11 with the boss upward, a concave anvil replacement die 10 is clamped by the second manipulator 2' and sheathed on the preform 7, and a lower surface of the journal is preliminarily forged from opposite bottom surfaces of the boss of the double-wing body.

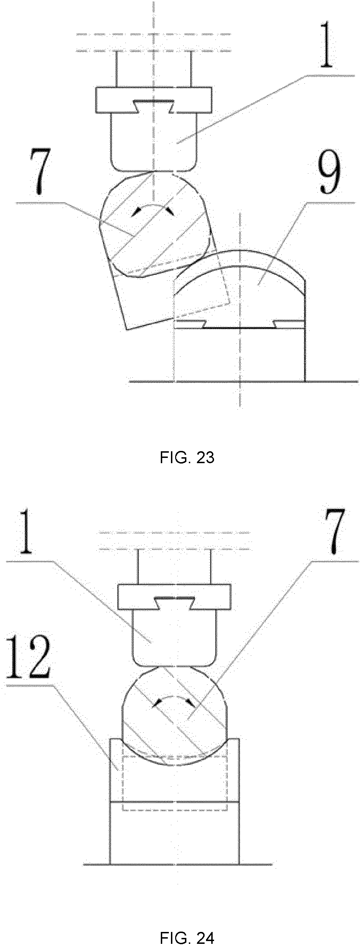

As shown in FIG. 22 and FIG. 23, the two side surfaces and the lower surface of the journal are placed on the male die 9, and the preform 7 is clamped by the second manipulator 2' to alternately forge the two side surfaces, the lower surface and connection parts of the journal by being flipped back and forth, and moved left and right, and the two side surfaces, the lower surface and the connection parts of the journal are forged to approximate journal shape. Preferably, the upper anvil 1 meanwhile forges and presses the boss into a polygonal shape.

As shown in FIG. 24, the journal of the preform 7 is placed on a female die 12, the preform 7 is clamped by the second manipulator 2' to flip back and forth and change forging and pressing angles, the upper anvil presses down a head portion of the boss, the head portion of the boss is forged and pressed into an upper surface of the polygonal journal, and the two side surfaces and the lower surface of the journal are forged and pressed in to a semi-cylinder.

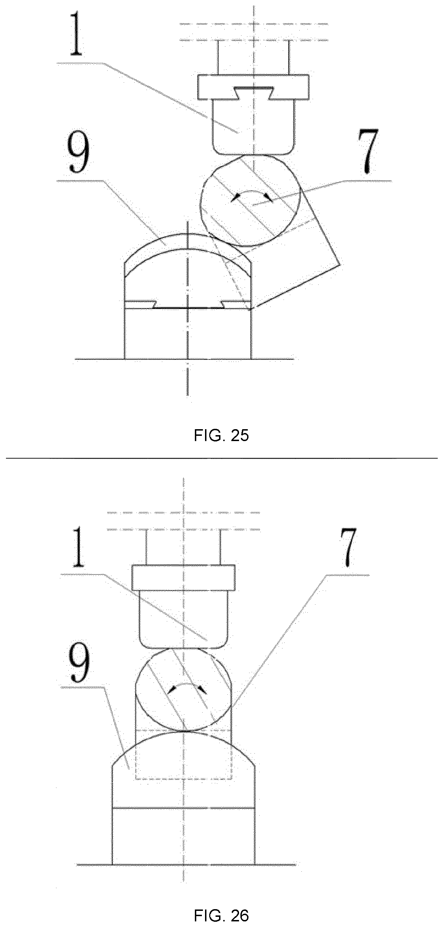

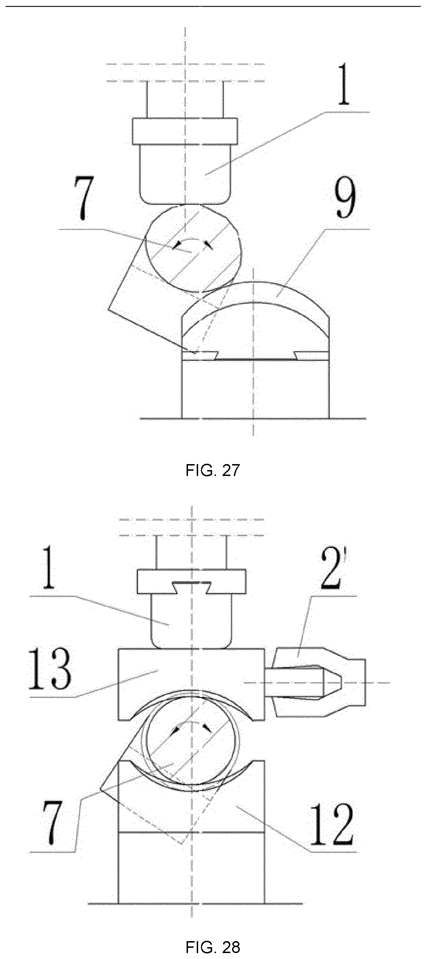

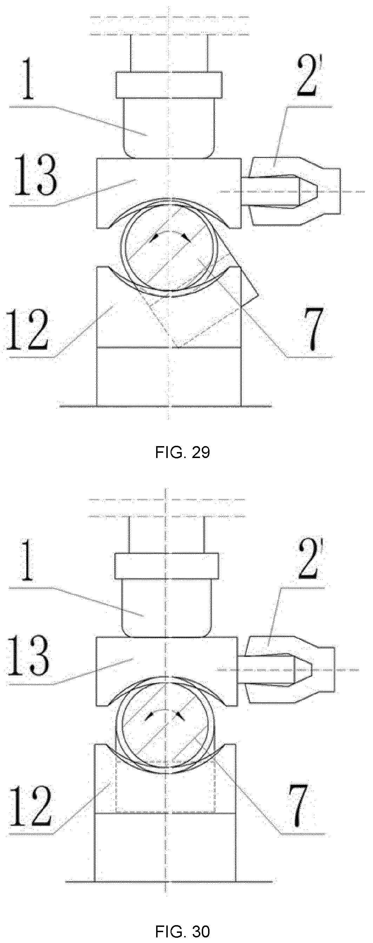

As shown in FIG. 25 to FIG. 30, the journal is placed between the upper anvil 1 and the male die 9, between the upper anvil 1 and the female die 12, between an arc-shaped anvil replacement die 13 and the male die 9, and between the arc-shaped anvil replacement die 13 and the female die 12, respectively, so as to forge the journal at multiple angles to form a cylindrical journal.

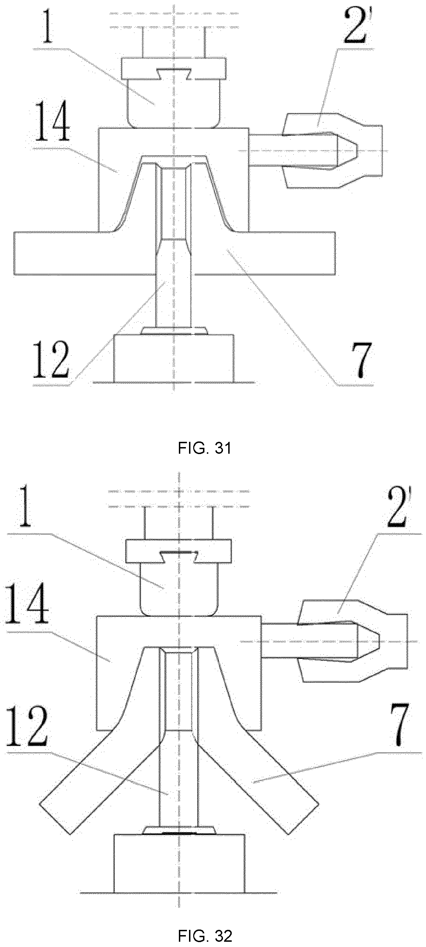

As shown in FIG. 31 and FIG. 32, the lower surface of the journal is placed on the female die 12, a reversely-buckled bent die 14 is clamped by the second manipulator 2' and reversely buckled on upper surfaces of the two wings of the double-wing body, and the upper anvil 1 is pressed down, so as to bend the preform 7 to a set angle, forming a "herringbone" shape.

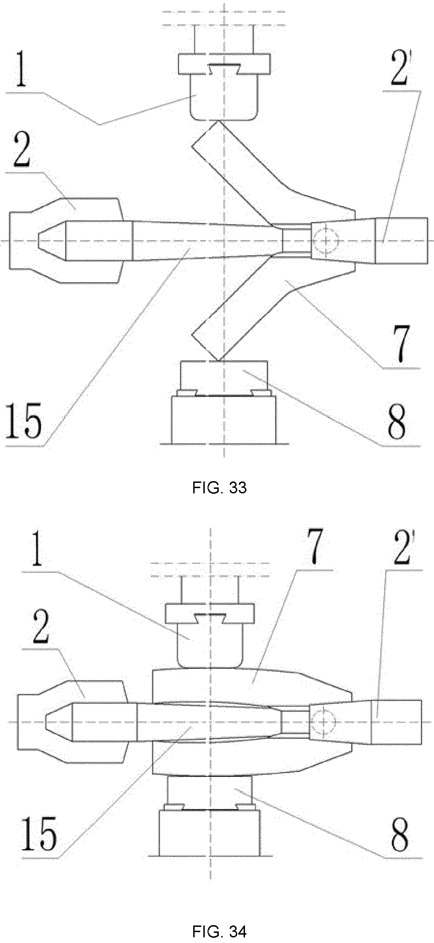

As shown in FIG. 33 and FIG. 34, the preform 7 is horizontally placed by the second manipulator 2' on the large flat anvil 8, a mandrel 15 having the largest thickness difference between two ends is inserted by the first manipulator 2 into an opening of the preform 7, and the two wings are pressed, and flipped up and down to be forged and pressed, so that the two wings get close to the mandrel.

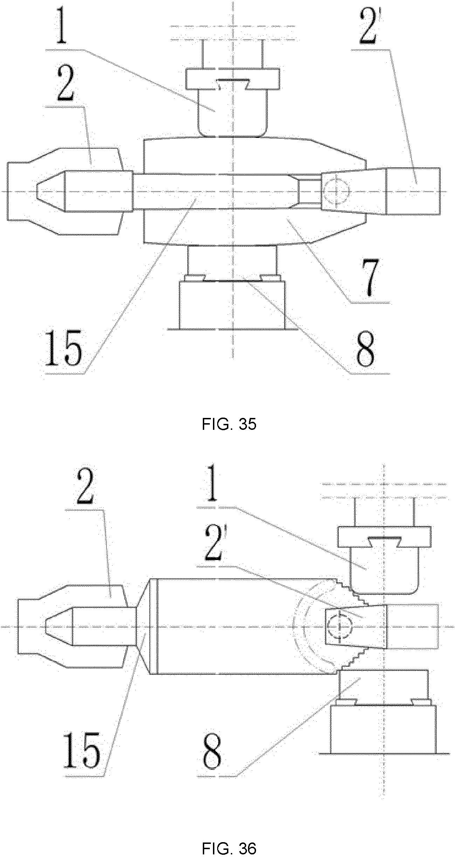

As shown in FIG. 35, mandrels 15 with a gradually decreased thickness difference between two ends are changed in sequence by the first manipulator 2. Actions in FIG. 33 and FIG. 34 are repeated, so that the two wings are further pressed to the mandrel, the forging piece is forged by flipping, and outer sides of the two wings are precision-forged, to obtain cranks of the crank throw. Preferably, two parallel cranks are forged.

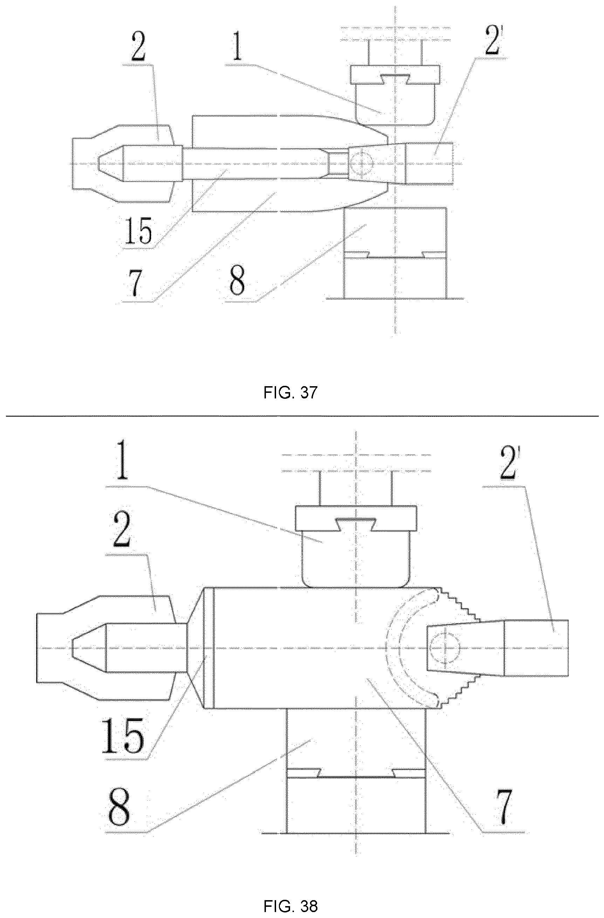

As shown in FIG. 36, the mandrel 15 and the preform 7 are flipped in a pressed state, and the head portion of the boss is forged on the large flat anvil 8. The preform 7 in the state of FIG. 36 is flipped by 90° to that shown in FIG. 37, and an upper end of the journal is further forged and stretched into a head portion of a square-frustum crank throw.

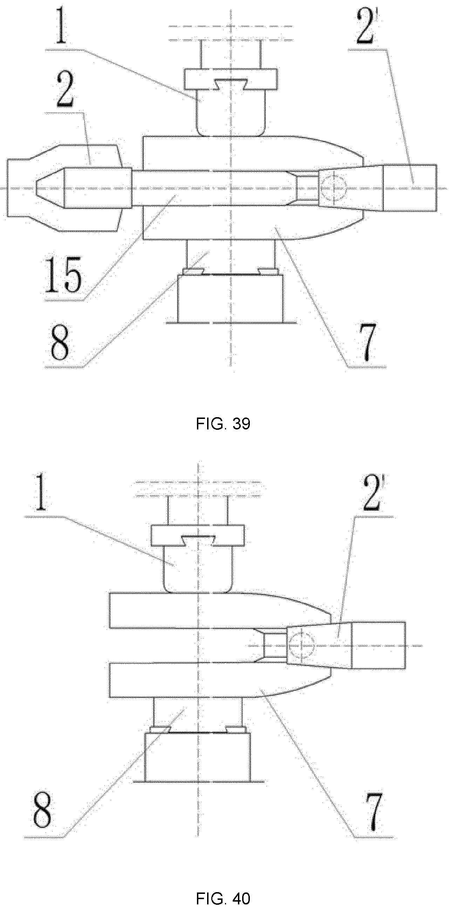

As shown in FIG. 38, the preform 7 is placed on the large flat anvil 8 to finish the crank. Alternatively, the preform 7 is placed on the small flat anvil 3 to finish the crank. As shown in FIG. 39, the mandrel 15 and the preform 7 are flipped in a pressed state, so as to finish side surfaces of the crank.

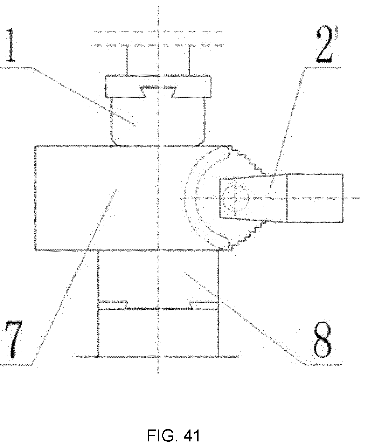

As shown in FIG. 40, the preform 7 is flipped, and the crank is placed on the large flat anvil 8 to precision-forge the crank throw to a set size. Alternatively, the preform 7 is flipped, and the crank is placed on the small flat anvil 3 to precision-forge the crank throw to a set size. As shown in FIG. 41, the forging piece is flipped by 90° to finish the side surfaces of the crank, thus completing the forging of the crank throw.

### Industrial Applicability

The present disclosure relates to a two-heating forming forging process for a large crank throw. A forging machine, anvil dies and operation devices are included. The shape and parameters of the preformed forging piece with a boss and double wings in the first heating are set, and multiple upsetting and stretching processes are used to complete the forging of the preform; the shape and parameters of multi-step transition piece in the second heating are set; forging and pressing are performed by changing angles, flipping back and forth, moving left and right, and anvil dies are repeatedly changed; rolling, extruding and bending are performed with use of the reversely-buckled bent die provided with an arc-shaped extruding surface' and pressing is performed for multiple times using multiple mandrels, so as to realize progressive transition forming of the forging piece, and complete the forming forging of the crank throw. The present disclosure completes the forming forging and bending forging of the crank throw forging piece with a low pressure and a short forging and pressing stroke, and implements the forging process for a large crank throw forging piece by a low-pressure forging machine. The present design has the characteristics of a large forging ratio, a good forming, a short forging time, less material loss and a low production cost.

In addition, it may be understood that the two-heating forming forging process for a large crank throw in the present disclosure is reproducible, and is applicable in various industrial applications. For example, the two-heating forming forging process for a large crank throw in the present disclosure is applicable in forging and other fields.

## Claims

1. A two-heating forming forging process for a large crank throw, comprising a forging machine, anvil dies and operation devices, wherein the anvil dies comprise an upper anvil (1), lower dies, mandrels (15) and upper dies, the lower dies comprise a small flat anvil (3), a large flat anvil (8), a double-edge groove pressing die (6), a male die (9), a trapezoidal die (11), and a female die (12), wherein the upper dies comprise an upsetting plate (5), anvil replacement dies and a reversely-buckled bent die (14); the operation devices comprise workbenches and manipulators, the workbenches comprise a horizontal workbench and a longitudinal workbench, the manipulators comprise a first manipulator (2) and a second manipulator (2'); the upper anvil (1) is connected to the forging machine, the male die (9) and the double-edge groove pressing die (6) respectively form a fixed hinge with the large flat anvil (8), the anvil replacement dies comprise a concave anvil replacement die (10) and an arc-shaped anvil replacement die, multiple mandrels (15) are provided, wherein different mandrels (15) have a different thickness difference between two ends, the lower die (13) is placed on the horizontal workbench and moves with the horizontal workbench, the first manipulator (2) clamps the forging piece (4), and the second manipulator (2') clamps the mandrel (15) or the upper die,
wherein the two-heating forming forging process for a large crank throw comprises following steps:
first heating: forging a preform of a double-wing body with a boss in the middle:
setting the double-wing body to have a length 1, a width b, a height h₁; and setting the boss to have a height h₂ and a width b, so that a total height of the preform is: h=h₁+h₂,
step 1, selecting steel billet according to weight requirement of a crank throw forging piece (4), and heating the steel billet to a set forging temperature;
step 2, placing the steel billet heated in step 1 between the upper anvil (1) and the small flat anvil (3) to stretch the steel billet;
step 3, standing the forging piece (4) stretched in step 2 on the longitudinal workbench in a length direction, and clamping, by the second manipulator (2'), the upsetting plate (5) to be placed between the forging piece (4) and the upper anvil (1), and upsetting the forging piece (4) to 1/2 of its original length;
step 4, stretching the forging piece (4) upset in step 3 to make it have a section of (3b/4) x (3b/4);
step 5, standing the forging piece (4) stretched in step 4 on the longitudinal workbench in the length direction, and upsetting the forging piece (4) to 1/2 of its original length;
step 6, stretching the forging piece (4) upset in step 5 to make it have a section of b x b;
step 7, placing a middle part of the forging piece (4) stretched in step 6 on the double-edge groove pressing die (6), and forging parallel left and right grooves on a lower side of the forging piece (4);
step 8, flipping the forging piece (4) with the left and right grooves in step 7 in an up-down direction by 180°, and forging the same on the large flat anvil (8), and correspondingly, forging a left side of the left groove and a right side of the right groove into a double-wing body with a width b, a height h1, and a length L, and forging a boss with a height h₂ and a width b between the left and right grooves, so as to make a double-wing preform (7);
second heating: forging forming:
setting a transition shape and parameters of double wings and a journal, and setting bending parameters.
step 9, heating the preform (7) in step 8 to a forging temperature;
step 10, placing the heated preform (7) on the large flat anvil (8), pressing the double wings thin and stretching the wings, and finishing them to a set size;
step 11, clamping the preform (7) by the first manipulator (2), placing a middle part of the preform in step 10 on the male die (9), forging the preform (7) by flipping back and forth by 180°, moving left and right, and changing positions for many times, so as to primarily forge two side surfaces of the journal;
step 12, placing the preform (7) in step 11 on the trapezoidal die (11) with the boss upward, clamping, by the second manipulator (2'), the concave anvil replacement die (10) to sheath the preform (7), and preliminarily forging a lower surface of the journal from opposite bottom surfaces of the boss of the double-wing body;
step 13, placing the two side surfaces and the lower surface of the journal in steps 11 and 12 on the male die (9), and forging the two side surfaces, the lower surface and connection parts of the journal by alternately flipping the preform (7) back and forth and moving the preform (7) left and right, to approximate shape of the journal;
step 14, placing the journal of the preform (7) in step 13 on the female die (12), flipping back and forth to change forging and pressing angles, making the upper anvil (1) press down a head portion of the boss, to forge and press the head portion of the boss into an upper surface of the journal in a polygonal shape, and forge and press the two side surfaces and the lower surface of the journal to be semi-cylindrical;
step 15, placing the journal forged in step 14 alternately on the male die (9) and the female die (12), and forging the journal at multiple angles by using an uneven anvil and the arc-shaped anvil replacement die as the upper anvils (1), to obtain a cylindrical blank of the journal;
step 16, placing the lower surface of the cylindrical journal on the female die (12), clamping, by the second manipulator (2'), the reversely-buckled bent die (14) to be reversely buckled on upper surfaces of the two wings of the double-wing body, and bending the preform (7) to a set angle, forming a herringbone shape;
step 17, placing the preform (7) in a herringbone shape on the large flat anvil (8), inserting, by the second manipulator (2'), a mandrel (15) with the largest thickness difference between two ends into an opening of the preform (7), pressing two sides of the herringbone to make two sides of the preform (7) get close to each other, flipping the preform (7) up and down to be forged and pressed again, and making the two sides of the preform (7) get close to the mandrel (15);
step 18, changing in sequence the mandrels (15) with gradually decreased thickness difference between two ends, repeating actions in step 17, attaching the two wings of the double-wing body to the mandrel (15), forging the preform (7) by flipping, and precision-forging outer sides of the double-wing body, to obtain cranks of the crank throw;
step 19, flipping the mandrel (15) and the preform (7) in synchronization in a pressed state, forging the head portion of the boss, and stretching the head portion into a square-frustum crank throw head portion; and
step 20, placing the preform (7) in step 19 on the large flat anvil (8) or the small flat anvil (3), and finishing the crank throw to a set size.

2. The two-heating forming forging process for a large crank throw according to claim 1, wherein the first manipulator (2) is a left manipulator, and the second manipulator (2') is a right manipulator.

3. The two-heating forming forging process for a large crank throw according to claim 1 or 2, wherein in step 2, the steel billet is stretched to 1.2-1.7 times of its original length.

4. The two-heating forming forging process for a large crank throw according to any one of claims 1 to 3, wherein in step 3, the forging piece (4) in a rectangular shape is upset to 1/2±20% of its original length.

5. The two-heating forming forging process for a large crank throw according to any one of claims 1 to 4, wherein in step 4, the forging piece (4) is stretched into a rectangular blank with a section of 3b/4 (1±5%) x 3b/4 (1±5%).

6. The two-heating forming forging process for a large crank throw according to any one of claims 1 to 5, wherein in step 5, the forging piece (4) is upset to 1/2±10% of its original length.

7. The two-heating forming forging process for a large crank throw according to any one of claims 1 to 6, wherein in step 6, the forging piece (4) is stretched to have a section of b(1+0~5%) x b(1+0~5%).

8. The two-heating forming forging process for a large crank throw according to any one of claims 1 to 7, wherein the male die (9) is an arc-shaped die.

9. The two-heating forming forging process for a large crank throw according to any one of claims 1 to 8, wherein a diameter of the preform (7) of the journal in the up-down direction is a diameter of a finished product ±5%.

10. The two-heating forming forging process for a large crank throw according to any one of claims 1 to 9, wherein a concave surface of the concave anvil replacement die (10) is meshed with a convex surface of the preform (7).

## Patentansprüche

1. Formschmiedeverfahren mit zwei Erhitzungen für einen großen Kurbelzapfen, umfassend eine Schmiedemaschine, Ambossmatrizen und Betätigungsvorrichtungen, wobei die Ambossmatrizen einen oberen Amboss (1), untere Matrizen, Dorne (15) und obere Matrizen umfassen, die unteren Matrizen einen kleinen flachen Amboss (3), einen großen flachen Amboss (8), eine Doppelkanten-Nutpressmatrize (6), eine vorstehende Matrize (9), eine trapezförmige Matrize (11) und eine vertiefte Matrize (12) umfassen, wobei die oberen Matrizen eine Stauchplatte (5), Ambossersatzmatrizen und eine umgekehrt gekrümmte gebogene Matrize (14) umfassen; die Betätigungsvorrichtungen Werkbänke und Manipulatoren umfassen, wobei die Werkbänke eine horizontale Werkbank und eine Längswerkbank umfassen, die Manipulatoren einen ersten Manipulator (2) und einen zweiten Manipulator (2') umfassen; der obere Amboss (1) mit der Schmiedemaschine verbunden ist, die vorstehende Matrize (9) und die Doppelkanten-Nutpressmatrize (6) jeweils ein festes Scharnier mit dem großen flachen Amboss (8) bilden, die Ambossersatzmatrizen eine konkave Ambossersatzmatrize (10) und eine bogenförmige Ambossersatzmatrize umfassen, mehrere Dorne (15) vorgesehen sind, wobei unterschiedliche Dorne (15) einen unterschiedlichen Dickenunterschied zwischen zwei Enden aufweisen, die untere Matrize (13) auf der horizontalen Werkbank platziert ist und sich mit der horizontalen Werkbank bewegt, der erste Manipulator (2) das Schmiedestück (4) klemmt und der zweite Manipulator (2') den Dorn (15) oder die obere Matrize klemmt,
wobei das Formschmiedeverfahren mit zwei Erhitzungen für einen großen Kurbelzapfen folgende Schritte umfasst:
erste Erhitzung: Schmieden einer Vorform eines doppelflügeligen Körpers mit einem Vorsprung in der Mitte:
Festlegen einer Länge 1, einer Breite b und einer Höhe h₁ für den doppelflügeligen Körper; und Festlegen einer Höhe h₂ und einer Breite b für den Vorsprung, sodass die Gesamthöhe der Vorform wie folgt lautet: h=h₁+h₂,
Schritt 1, Auswählen eines Stahlblocks entsprechend Gewichtsanforderungen eines Kurbelzapfen-Schmiedestücks (4) und Erhitzen des Stahlblocks auf eine festgelegte Schmiedetemperatur;
Schritt 2, Platzieren des Stahlblocks, der in Schritt 1 erhitzt wurde, zwischen dem oberen Amboss (1) und dem kleinen flachen Amboss (3), um den Stahlblock zu strecken;
Schritt 3, Stellen des Schmiedestücks (4), das in Schritt 2 gestreckt wurde, in einer Längsrichtung auf die Längswerkbank und Klemmen der Stauchplatte (5), die zwischen dem Schmiedestück (4) und dem oberen Amboss (1) zu platzieren ist, durch den zweiten Manipulator (2') und Stauchen des Schmiedestücks (4) auf 1/2 seiner ursprünglichen Länge;
Schritt 4, Strecken des Schmiedestücks (4), das in Schritt 3 gestaucht wurde, um ihm einen Querschnitt von (3b/4) x (3b/4) zu verleihen;
Schritt 5, Stellen des Schmiedestücks (4), das in Schritt 4 gestreckt wurde, in der Längsrichtung auf die Längswerkbank und Stauchen des Schmiedestücks (4) auf 1/2 seiner ursprünglichen Länge;
Schritt 6, Strecken des Schmiedestücks (4), das in Schritt 5 gestaucht wurde, um ihm einen Querschnitt von b x b zu verleihen;
Schritt 7, Platzieren eines mittleren Teils des Schmiedestücks (4), das in Schritt 6 gestreckt wurde, auf der Doppelkanten-Nutpressform (6) und Schmieden paralleler linker und rechter Nuten auf einer Unterseite des Schmiedestücks (4);
Schritt 8, Drehen des Schmiedeteils (4) mit der linken und rechten Nut in Schritt 7 um 180° in einer Auf-Ab-Richtung und Schmieden desselben auf dem großen flachen Amboss (8) und entsprechend Schmieden einer linken Seite der linken Nut und einer rechten Seite der rechten Nut zu einem doppelflügeligen Körper mit einer Breite b, einer Höhe h₁ und einer Länge L, und Schmieden eines Vorsprungs mit einer Höhe h₂ und einer Breite b zwischen der linken und der rechten Nut, um eine doppelflügelige Vorform (7) herzustellen;
zweite Erhitzung: Schmiedeformen:
Festlegen einer Übergangsform und von Parametern für Doppelflügel und einen Lagerzapfen sowie Festlegen von Biegeparametern;
Schritt 9, Erhitzen der Vorform (7) in Schritt 8 auf eine Schmiedetemperatur;
Schritt 10, Platzieren der erhitzten Vorform (7) auf dem großen flachen Amboss (8), Pressen der Doppelflügel dünn und Strecken der Flügel sowie Fertigstellen auf eine festgelegte Größe;
Schritt 11, Klemmen der Vorform (7) durch den ersten Manipulator (2), Platzieren eines mittleren Teils der Vorform in Schritt 10 auf der vorstehenden Matrize (9), Schmieden der Vorform (7) durch mehrmaliges Hin- und Herdrehen um 180°, Bewegen nach links und rechts und Verändern von Positionen, um in erster Linie zwei Seitenflächen des Lagerzapfens zu schmieden;
Schritt 12, Platzieren der Vorform (7) in Schritt 11 auf der trapezförmigen Matrize (11) mit dem Vorsprung nach oben, Klemmen der konkaven Ambossersatzmatrize (10) durch den zweiten Manipulator (2'), um die Vorform (7) zu ummanteln, und vorläufiges Schmieden einer unteren Fläche des Lagerzapfens von gegenüberliegenden Bodenflächen des Vorsprungs des doppelflügeligen Körpers;
Schritt 13, Platzieren der zwei Seitenflächen und der unteren Fläche des Lagerzapfens in den Schritten 11 und 12 auf der vorstehenden Matrize (9) und Schmieden der zwei Seitenflächen, der unteren Fläche und der Verbindungsteile des Lagerzapfens durch abwechselndes Hin- und Herdrehen der Vorform (7) und Bewegen der Vorform (7) nach links und rechts, um eine Form des Lagerzapfens anzunähern;
Schritt 14, Platzieren des Lagerzapfens der Vorform (7) in Schritt 13 auf der vertieften Matrize (12), Vor- und Zurückdrehen, um die Schmiede- und Presswinkel zu ändern, wobei der obere Amboss (1) einen Kopfabschnitt des Vorsprungs nach unten drückt, um den Kopfabschnitt des Vorsprungs in eine polygonale Form in die obere Fläche des Lagerzapfens zu schmieden und zu pressen und die zwei Seitenflächen und die untere Fläche des Lagerzapfens halbzylindrisch zu schmieden und zu pressen;
Schritt 15, Platzieren des Lagerzapfens, der in Schritt 14 geschmiedet wurde, abwechselnd auf der vorstehenden Matrize (9) und der vertieften Matrize (12) und Schmieden des Lagerzapfens in mehreren Winkeln unter Verwendung eines unebenen Ambosses und der bogenförmigen Ambossersatzmatrize als obere Ambosse (1), um einen zylindrischen Rohling des Lagerzapfens zu erhalten;
Schritt 16, Platzieren der unteren Fläche des zylindrischen Lagerzapfens auf der vertieften Matrize (12), Klemmen der umgekehrt gekrümmten gebogenen Matrize (14) durch den zweiten Manipulator (2'), um sie auf die oberen Flächen der beiden Flügel des doppelten Flügelkörpers umgekehrt zu krümmen, und Biegen der Vorform (7) auf einen festgelegten Winkel, wodurch eine Fischgrätenform gebildet wird;
Schritt 17, Platzieren der Vorform (7) in einer Fischgrätenform auf dem großen flachen Amboss (8), Einführen eines Dorns (15) mit dem größten Dickenunterschied zwischen zwei Enden in eine Öffnung der Vorform (7) durch den zweiten Manipulator (2'), Pressen von zwei Seiten der Fischgräte, um zwei Seiten der Vorform (7) nahe aneinander zu bringen, Drehen der Vorform (7) nach oben und unten, um sie erneut zu schmieden und zu pressen, und Annähern der zwei Seiten der Vorform (7) an den Dorn (15);
Schritt 18, nacheinander Austauschen der Dorne (15) mit allmählich abnehmendem Dickenunterschied zwischen zwei Enden, Wiederholen der Vorgänge in Schritt 17, Anbringen der zwei Flügel des doppelflügeligen Körpers an dem Dorn (15), Schmieden der Vorform (7) durch Drehen und Präzisionsschmieden äußerer Seiten des doppelflügeligen Körpers, um Kurbeln des Kurbelzapfens zu erhalten;
Schritt 19, Drehen des Dorns (15) und der Vorform (7) synchron in einem gepressten Zustand, Schmieden des Kopfabschnitts des Vorsprungs und Strecken des Kopfabschnitts zu einem quadratischen, kegelstumpfförmigen Kurbelzapfenkopfabschnitt; und
Schritt 20, Platzieren der Vorform (7) in Schritt 19 auf dem großen flachen Amboss (8) oder dem kleinen flachen Amboss (3) und Fertigstellen des Kurbelzapfens auf eine festgelegte Größe.

2. Formschmiedeverfahren mit zwei Erhitzungen für einen großen Kurbelzapfen nach Anspruch 1, wobei der erste Manipulator (2) ein linker Manipulator ist und der zweite Manipulator (2') ein rechter Manipulator ist.

3. Formschmiedeverfahren mit zwei Erhitzungen für einen großen Kurbelzapfen nach Anspruch 1 oder 2, wobei in Schritt 2 der Stahlblock auf das 1,2- bis 1,7-fache seiner ursprünglichen Länge gestreckt wird.

4. Formschmiedeverfahren mit zwei Erhitzungen für einen großen Kurbelzapfen nach Anspruch 1 bis 3, wobei in Schritt 3 das Schmiedestück (4) in rechteckiger Form auf 1/2 ± 20 % seiner ursprünglichen Länge gestaucht wird.

5. Formschmiedeverfahren mit zwei Erhitzungen für einen großen Kurbelzapfen nach Anspruch 1 bis 4, wobei in Schritt 4 das Schmiedestück (4) zu einem rechteckigen Rohling mit einem Querschnitt von 3b/4 (1 ± 5 %) x 3b/4 (1 ± 5 %) gestreckt wird.

6. Formschmiedeverfahren mit zwei Erhitzungen für einen großen Kurbelzapfen nach Anspruch 1 bis 5, wobei in Schritt 5 das Schmiedestück (4) auf 1/2 ± 10 % seiner ursprünglichen Länge gestaucht wird.

7. Formschmiedeverfahren mit zwei Erhitzungen für einen großen Kurbelzapfen nach Anspruch 1 bis 6, wobei in Schritt 6 das Schmiedestück (4) so gedehnt wird, dass es einen Querschnitt von b(1+0~5%) x b(1+0~5%) aufweist.

8. Formschmiedeverfahren mit zwei Erhitzungen für einen großen Kurbelzapfen nach Anspruch 1 bis 7, wobei die vorstehende Matrize (9) eine bogenförmige Matrize ist.

9. Formschmiedeverfahren mit zwei Erhitzungen für einen großen Kurbelzapfen nach Anspruch 1 bis 8, wobei ein Durchmesser der Vorform (7) des Lagerzapfens in der Auf-Ab-Richtung einem Durchmesser eines Endprodukts ±5 % entspricht.

10. Formschmiedeverfahren mit zwei Erhitzungen für einen großen Kurbelzapfen nach Anspruch 1 bis 9, wobei eine konkave Fläche der konkaven Ambossersatzmatrize (10) mit einer konvexen Fläche der Vorform (7) in Eingriff steht.

## Revendications

1. Procédé de forgeage-façonnage à deux étapes de chauffage pour un coude de vilebrequin de grande taille, comprenant une machine de forgeage, des matrices d'enclume et des dispositifs de commande, dans lequel les matrices d'enclume comprennent une enclume supérieure (1), des matrices inférieures, des mandrins (15) et des matrices supérieures, les matrices inférieures comprennent une petite enclume plate (3), une grande enclume plate (8), une matrice de compression de rainure à double bord (6), une matrice mâle (9), une matrice trapézoïdale (11) et une matrice femelle (12), dans lequel les matrices supérieures comprennent une plaque de refoulement (5), des matrices de remplacement d'enclume et une matrice courbée à boucle inversée (14) ; les dispositifs de commande comprennent des plans de travail et des manipulateurs, les plans de travail comprennent un plan de travail horizontal et un plan de travail longitudinal, les manipulateurs comprennent un premier manipulateur (2) et un deuxième manipulateur (2') ; l'enclume supérieure (1) est reliée à la machine de forgeage, la matrice mâle (9) et la matrice de compression de rainure à double bord (6) forment respectivement une charnière fixe avec la grande enclume plate (8), les matrices de remplacement d'enclume comprennent une matrice de remplacement d'enclume concave (10) et une matrice de remplacement d'enclume arquée, il est prévu une multitude de mandrins (15), dans lequel différents mandrins (15) présentent différentes différences d'épaisseur entre deux extrémités, la matrice inférieure (13) est placée sur le plan de travail horizontal et se déplace avec le plan de travail horizontal, le premier manipulateur (2) serre la pièce de forgeage (4), et le deuxième manipulateur (2') serre le mandrin (15) ou la matrice supérieure,
dans lequel le procédé de forgeage-façonnage à deux étapes de chauffage pour un coude de vilebrequin de grande taille comprend les étapes suivantes :
premier chauffage : forgeage d'une préforme d'un corps à double aile avec un bossage au centre ;
réglage du corps à double aile de manière à obtenir une longueur 1, une largeur b, une hauteur h₁ ; et
réglage du bossage de manière à obtenir une hauteur h₂ et une largeur b, de telle façon qu'une hauteur totale de la préforme s'élève à : h=h₁+h₂
étape 1, sélection d'une billette d'acier en fonction des exigences de poids d'une pièce de forgeage de coude de vilebrequin (4), et chauffage de la billette d'acier à une température de forgeage définie ;
étape 2, disposition de la billette d'acier chauffée dans l'étape 1 entre l'enclume supérieure (1) et la petite enclume plate (3) pour étirer la billette d'acier ;
étape 3, placement de la pièce de forgeage (4) étirée dans l'étape 2 debout sur le plan de travail longitudinal dans une direction longitudinale, et serrage, par le deuxième manipulateur (2'), de la plaque de refoulement (5) à placer entre la pièce de forgeage (4) et l'enclume supérieure (1), et refoulement de la pièce de forgeage (4) à 1/2 de sa longueur initiale ;
étape 4, étirement de la pièce de forgeage (4) refoulée dans l'étape 3 pour lui conférer une section de (3b/4) x (3b/4) ;
étape 5, placement de la pièce de forgeage (4) étirée dans l'étape 4 debout sur le plan de travail longitudinal dans la direction longitudinale, et refoulement de la pièce de forgeage (4) à 1/2 de sa longueur initiale ;
étape 6, étirement de la pièce de forgeage (4) refoulée dans l'étape 5 pour lui conférer une section de b x b ;
étape 7, disposition d'une partie centrale de la pièce de forgeage (4) étirée dans l'étape 6 sur la matrice de compression de rainure à double bord (6), et forgeage de rainures gauche et droite parallèles sur un côté inférieur de la pièce de forgeage (4) ;
étape 8, retournement de 180° de la pièce de forgeage (4) avec les rainures gauche et droites dans l'étape 7 dans une direction de haut en bas, et forgeage de celle-ci sur la grande enclume plate (8), et de façon correspondante, forgeage d'un côté gauche de la rainure gauche et d'un côté droit de la rainure droite en un corps à double aile avec une largeur b, une hauteur h₁ et une longueur L, et forgeage d'un bossage avec une hauteur h₂ et une largeur b entre les rainures gauche et droite, de manière à réaliser une préforme à double aile (7) ;
deuxième chauffage : façonnage-forgeage
réglage d'une forme de transition et de paramètres de double ailes et d'un tourillon ; et
réglage de paramètres de cintrage ;
étape 9, chauffage de la préforme (7) dans l'étape 8 à une température de forgeage ;
étape 10, disposition de la préforme chauffée (7) sur la grande enclume plate (8), compression des doubles ailes pour les rendre fines et étirement des ailes, et finition de celles-ci à une taille définie ;
étape 11, serrage de la préforme (7) par le premier manipulateur (2), disposition d'une partie centrale de la préforme dans l'étape 10 sur la matrice mâle (9), forgeage de la préforme (7) par retournement de 180° vers l'arrière et l'avant, déplacement vers la gauche et la droite, et changement de positions à plusieurs reprises, de manière à forger principalement deux surfaces latérales du tourillon ;
étape 12, disposition de la préforme (7) dans l'étape 11 sur la matrice trapézoïdale (11) avec le bossage vers le haut, serrage, par le deuxième manipulateur (2'), de la matrices de remplacement d'enclume concave (10) pour gainer la préforme (7), et forgeage préliminaire d'une surface inférieure du tourillon à partir de surfaces de fond opposées du bossage du corps à double aile ;
étape 13, disposition des deux surfaces latérales et de la surface inférieure du tourillon dans les étapes 11 et 12 sur la matrice mâle (9), et forgeage des deux surfaces latérales, de la surface inférieure et des parties de connexion du tourillon par retournement alterné de la préforme (7) vers l'arrière et l'avant et déplacement de la préforme (7) vers la gauche et la droite, pour former approximativement le tourillon ;
étape 14, disposition du tourillon de la préforme (7) dans l'étape 13 sur la matrice femelle (12), retournement vers l'arrière et l'avant pour modifier des angles de forgeage et de compression, appui de la matrice supérieure (1) vers le bas sur une portion de tête du bossage, pour forger et comprimer la portion de tête du bossage dans une surface supérieure du tourillon en une forme polygonale, et forger et comprimer les deux surfaces latérales et la surface inférieure du tourillon pour les rendre semi-cylindriques ;
étape 15, disposition du tourillon forgé dans l'étape 14 de façon alternée sur la matrice mâle (9) et la matrice femelle (12), et forgeage du tourillon sous une multitude d'angles à l'aide d'une enclume irrégulière et de la matrices de remplacement d'enclume arquée comme enclumes supérieures (1), pour obtenir une ébauche cylindrique du pivot ;
étape 16, disposition de la surface inférieure du tourillon cylindrique sur la matrice femelle (12), serrage, par le deuxième manipulateur (2'), de la matrice courbée à boucle inversée (14) pour obtenir une boucle inverse sur des surfaces supérieures des deux ailes du corps à deux ailes, et cintrage de la préforme (7) selon un angle défini, en une forme de chevron ;
étape 17, disposition de la préforme (7) en forme de chevron sur la grande enclume plate (8), insertion, par le deuxième manipulateur (2'), d'un mandrin (15) avec la plus grande différence d'épaisseur entre deux extrémités dans une ouverture de la préforme (7), compression de deux côtés du chevron pour rapprocher deux côtés de la préforme (7) entre eux, retournement de la préforme (7) vers le haut et le bas pour la forger et la comprimer de nouveau, et rapprochement des deux côtés de la préforme (7) par rapport au mandrin (15) ;
étape 18, changement de l'ordre des mandrins (15) avec une différence d'épaisseur diminuant progressivement entre deux extrémités, répétition des actions dans l'étape 17, fixation des deux ailes du corps à double aile au mandrin (15), forgeage de la préforme (7) par retournement, et forgeage de précision de côtés extrémités du corps à double aile, pour obtenir des vilebrequins du coude de vilebrequin ;
étape 19, retournement du mandrin (15) et de la préforme (7) de façon synchrone dans un état comprimé, forgeage de la portion de tête du bossage, et étirement de la portion de tête en une portion de tête de coude de vilebrequin à tronc carré ; et
étape 20, disposition de la préforme (7) dans l'étape 19 sur la grande enclume plate (8) ou sur la petite enclume plate (3), et finition du coude de vilebrequin à une taille définie.

2. Procédé de forgeage-façonnage à deux étapes de chauffage pour un coude de vilebrequin de grande taille selon la revendication 1, dans lequel le premier manipulateur (2) est un manipulateur gauche, et le deuxième manipulateur (2') est un manipulateur droit.

3. Procédé de forgeage-façonnage à deux étapes de chauffage pour un coude de vilebrequin de grande taille selon la revendication 1 ou 2, dans lequel, dans l'étape 2, la billette d'acier est étirée à 1,2-1,7 fois sa longueur initiale.

4. Procédé de forgeage-façonnage à deux étapes de chauffage pour un coude de vilebrequin de grande taille selon l'une quelconque des revendications 1 à 3, dans lequel, dans l'étape 3, la pièce de forgeage (4) dans une forme rectangulaire est refoulée à 1/2 ± 20 % de sa longueur initiale.

5. Procédé de forgeage-façonnage à deux étapes de chauffage pour un coude de vilebrequin de grande taille selon l'une quelconque des revendications 1 à 4, dans lequel, dans l'étape 4, la pièce de forgeage (4) est étirée en une ébauche rectangulaire avec une section de 3b/4 (1 ± 5 %) x 3b/4 (1 ± 5 %).

6. Procédé de forgeage-façonnage à deux étapes de chauffage pour un coude de vilebrequin de grande taille selon l'une quelconque des revendications 1 à 5, dans lequel, dans l'étape 5, la pièce de forgeage (4) est refoulée à 1/2 ± 10 % de sa longueur initiale.

7. Procédé de forgeage-façonnage à deux étapes de chauffage pour un coude de vilebrequin de grande taille selon l'une quelconque des revendications 1 à 6, dans lequel, dans l'étape 6, la pièce de forgeage (4) est étirée de manière à avoir une section de b(1+0~5%) x b(1+0~5%).

8. Procédé de forgeage-façonnage à deux étapes de chauffage pour un coude de vilebrequin de grande taille selon l'une quelconque des revendications 1 à 7, dans lequel la matrice mâle (9) est une matrice arquée.

9. Procédé de forgeage-façonnage à deux étapes de chauffage pour un coude de vilebrequin de grande taille selon l'une quelconque des revendications 1 à 8, dans lequel un diamètre de la préforme (7) du tourillon dans la direction de haut en bas est un diamètre d'un produit fini ± 5 %.

10. Procédé de forgeage-façonnage à deux étapes de chauffage pour un coude de vilebrequin de grande taille selon l'une quelconque des revendications 1 à 9, dans lequel une surface concave de la matrices de remplacement d'enclume concave (10) est en prise avec une surface concave de la préforme (7).
